# EUROPÄISCHE PATENTSCHRIFT

(11) **EP 2 463 134 B1**
(45) Veröffentlichungstag und Bekanntmachung des Hinweises auf die Patenterteilung: **09.01.2019**
(21) Anmeldenummer: 11190434.8
(22) Anmeldetag: 24.11.2011
(51) Int. Cl.: B60J 10/16, B60J 10/235, B60J 10/30, B60J 10/70, B60J 10/78

(54) **Dichtungsvorrichtung für eine Scheibeneinheit und dazugehöriges Herstellungsverfahren**
Seal system for a window arrangement including manufacturing method
Joint d'étanchéité pour un moudle de vitrage y compris le procédé de fabrication

(30) Priorität: 08.12.2010 DE 102010061103
(43) Veröffentlichungstag der Anmeldung: 13.06.2012
(73) Patentinhaber: Richard Fritz Holding GmbH, 74354 Besigheim (DE)
(72) Erfinder: Schapitz, Nikolaj, 74354 Besigheim (DE)
(74) Vertreter: Maser, Jochen

(56) Entgegenhaltungen:
- EP-A2- 1 690 710
- WO-A1-2008/118903
- DE-A1- 3 432 592
- DE-A1-102007 015 466
- DE-U1- 20 006 771
- FR-A1- 2 858 950
- GB-A- 2 411 924
- JP-A- 2001 071 752
- JP-A- 2007 276 686
- US-A1- 2003 168 882

## Beschreibung

Die Erfindung betrifft eine Scheibeneinheit für Fenster an Kraftfahrzeugen mit einer ersten Scheibe, welche zumindest teilweise von einem Rahmen mit einem Rahmenprofil umgeben ist, wobei der Rahmen aus zwei Profilteilen mit einem Primärteil und einem Sekundärteil besteht, wobei das Primärteil als Hartkomponente ausgebildet ist, dessen Formfestigkeit größer als diejenige des als Weichkomponente ausgebildeten Sekundärteils ist.

Aus der gattungsgemäßen GB 2 411 924 A ist eine Scheibeneinheit für Fenster an Kraftfahrzeugen bekannt, welche einen Rahmen an einer ersten festen Scheibe aufweist, wobei der Rahmen als Umspritzung ausgebildet ist, welche aus einem Primärteil und einem Sekundärteil besteht. Das Primärteil ist als Hartkomponente ausgebildet, dessen Formfestigkeit größer als diejenige des als Weichkomponente ausgebildeten Sekundärteils ist. Das Primärteil ist direkt an der ersten festen Scheibe angespritzt. Des Weiteren weist die Scheibeneinheit eine Führung für eine zweite auf und ab bewegbare Scheibe auf, die als U-förmiger Fensterführungssteg ausgebildet ist, der mit dem Primärteil einstückig ist.

Aus der EP 0 857 116 B1 ist eine Scheibeneinheit für Fenster von Kraftfahrzeugen bekannt, welche mit einem Rahmen aus Kunststoff versehen ist, welcher ein bestimmtes Querschnittsprofil hat. Diese Scheibeneinheit wird mit Hilfe ihres Rahmens in eine vorbestimmte Öffnung des Kraftfahrzeuges eingesetzt und darin befestigt. Der Rahmen wird aus zwei Profilteilen gebildet, von denen der primäre Profilteil den Randbereich der Glasscheibe auf drei Seiten formschlüssig umgibt. Der Rahmen wird durch Einspritzen eines Kunststoffes für den primären Profilteil um die Scheibe hergestellt. Anschließend wird auf das Primärteil ein sekundäres Profilteil mit weiteren Profilabschnitten aufgebracht, so dass eine 2-Komponenten-Umspritzung der Scheibe gegeben ist. Das Sekundärteil weist eine geringere Formfestigkeit seines Werkstoffes als das Primärteil auf und ist ausreichend nachgiebig, um anschmiegsame Dichtungsleisten zu bilden. Nachteilig bei dieser Scheibenanordnung ist, dass zur Herstellung einer Scheibeneinheit mit einem Führungssteg ein zuvor ein in ein Spritzgusswerkzeug separat hergestellter Führungssteg nach dem Anbringen des Primärteils an der Scheibe in ein weiteres Spritzgusswerkzeug eingelegt werden muss, damit über das Sekundärteil der Führungssteg fest zur Scheibeneinheit verbunden ist.

Eine weitere bekannte Scheibenanordnung ist aus der JP 2001-071752 A bekannt, wobei die Herstellung einer Dichtung um eine feste Scheibe gegenüber einer bewegbaren Scheibe beschrieben ist. Hierbei ist eine Umspritzung aus einem weichen Dichtmaterial offenbart, um die feste Scheibe unmittelbar mit der Karosserie zu verbinden beziehungsweise gegenüber dem das bewegbare Fenster tragenden Rahmen abzudichten. Nachteil dieser Anordnung ist eine aufwändige Fertigung eines Fensterführungsstegs aus Harz und Gummi, der anschließend an dem Fenster befestigt und mit einem Dichtrahmen versehen wird. Dies bedeutet eine schwierige Montage. Auch diese Anordnung weist den Nachteil auf, dass deren Steg erst nachträglich mit dem Rahmen der Scheibe verbunden werden kann.

Aus der DE 10 2007 015 466 A1 geht eine Dichtungsanordnung für eine Scheibeneinheit mit einer feststehenden Scheibe und einer auf und ab bewegbaren Scheibe hervor, welche ein metallisches Profilelement umfasst, das von einem Dichtelement umspritzt ist, wobei das Dichtelement an der feststehenden Scheibe angreift und diese zum metallischen Profilelement positioniert. Gegenüberliegend ist in einem U-förmigen Profilabschnitt des metallischen Profilelementes ein Fensterführungselement eingesetzt, um die auf und ab bewegbaren Scheiben zu führen. Diese Dichtungsanordnung weist den Nachteil auf, dass zunächst die Herstellung eines metallischen Profilelements als Versteifungselement erforderlich ist, welches anschließend in ein Werkzeug einzulegen ist, um die Dichtungsanordnung durch Einspritzen Dichtungselementes herzustellen.

Aus der DE 200 06 771 geht eine analoge Anordnung hervor.

Die WO 2008/118903 A1 offenbart des Weiteren eine Dichtungsanordnung für eine feststehende Scheibe und eine gegenüberliegend dazu angeordnete und auf und ab bewegbare Scheibe, bei der ein separater Fensterführungssteg aus einer Hartkomponente und einer Weichkomponente durch eine Umspritzung mit der festen Scheibe verbunden ist.

Aus der FR 2 858 950 sowie der JP 2007-7276686 sind zweiteilige Fensterführungsstege bekannt, welche in der Handhabung und Montage aufwändig sind.

Aus der US 2003/0168882 A1 ist eine Scheibeneinheit bekannt, bei der eine feststehende Scheibe mit einem Rahmen aus einer Umspritzung umgeben ist. Zwischen einem Führungssteg und der feststehenden Scheibe ist eine Weichkomponente vorgesehen. Der von einer Stirnseite der ersten festen Scheibe hinaus nach unten in die Karosserie der Tür sich erstreckende Fensterführungssteg ist als separates Bauteil ausgebildet, der an der Tür befestigt ist.

Aufgabe der Erfindung ist es daher, eine Scheibeneinheit zur Verfügung zu stellen, mit welcher die Herstellung und die Montage der Scheibe mit einer Fensterführung vereinfacht werden. Außerdem betrifft die Erfindung ein Verfahren zu dessen Herstellung.

Eine Lösung wird durch die Merkmale des Anspruch 1 bereitgestellt. Alternative Ausführungsformen sind in den Unteransprüchen beschrieben.

Bei der erfindungsgemäßen Scheibeneinheit ist vorgesehen, bei welchem sich der U-förmige Fensterführungssteg über eine Stirnseite der ersten festen Scheibe hinaus nach unten in eine Karosserie der Tür fortsetzt und der Fensterführungssteg und das Primärteil des Rahmens weiterhin einstückig ausgebildet sind. Dadurch, dass der Führungssteg einstückig mit der Hartkomponente der Umspritzung der ersten Scheibe gebildet ist, kann eine erhebliche Vereinfachung in der Herstellung erfolgen. Zum einen ist eine gesonderte Herstellung des Führungssteges in einem extra Arbeitsgang nicht erforderlich, und zum anderen ist darüber hinaus entbehrlich, dass dieser separate Führungssteg in das Spritzgusswerkzeug eingelegt wird, bevor das Primärteil als Hartkomponente an die Scheibe angespritzt oder das Sekundärteil angespritzt wird.

Als vorteilhafte Weiterbildung der Erfindung ist vorgesehen, dass außerhalb eines Sichtbereiches der festen Scheibe im eingebauten Zustand der Scheibeneinheit Befestigungselemente aus der Hartkomponente ausgebildet sind, welche an dem Führungssteg angeformt sind. Dabei kann es sich um Befestigungsbohrungen handeln, welche eine Fixierung mit weiteren Befestigungselementen an der Karosserie ermöglichen oder auch um eingelegte Befestigungsteile, wie Schrauben, Gewinde oder dergleichen handeln, womit die Fixierung an der Karosserie erzielt werden kann. Ergänzend können im äußeren Randbereich benachbart zur Umspritzung ein oder mehrere Hakenelemente aus der Hartkomponente vorgesehen sein. Dieses Hakenelement kann auch im Zusammenwirken mit weiteren Hakenelementen am Umfang der Umspritzung als eine so genannte Umschuhung wirken, das heißt, dass ein hintergreifendes Hakenelement ausgebildet ist, welches mit einem weiteren Hakenelement eine Befestigung bildet. Durch diese Alternativen kann des Weiteren eine Vereinfachung in der Herstellung erzielt werden, insbesondere wenn die Hartkomponente selbst ein Befestigungselement bildet.

Eine weitere vorteilhafte Ausführungsform wird dadurch erreicht, dass das Sekundärteil des Rahmens zumindest abschnittsweise das Primärteil umgibt und im sichtbaren Bereich der Scheibeneinheit an einer Außenseite der Scheibe oder beidseitig an der Scheibe abdichtend abschließt. Unter beidseitig ist vorstehend die Innen- und die Außenseite der Scheibe zu verstehen, wobei das Sekundärteil das Primärteil beziehungsweise die Weichkomponente die Hartkomponente im Umfang vollständig oder teilweise umschließend aufnimmt. Die vorgesehenen Befestigungselemente sind im Bereich des nicht sichtbaren Bereichs der Scheibeneinheit in eingebautem Zustand angeordnet und frei von der Weichkomponente beziehungsweise dem Sekundärteil. Die Weichkomponente umgibt die Hartkomponente im sichtbaren Bereich, wobei der sichtbare Bereich in Längsrichtung unten etwas unterhalb sowie oben etwas oberhalb in der Karosserie endet. Außerhalb des sichtbaren Bereichs der Scheibeneinheit im eingebauten Zustand ist entweder ausschließlich die Hartkomponente vorgesehen, und die Hartkomponente ist unmittelbar an die Scheibe angespritzt oder die Weichkomponente ist als optisches Element und/oder Dichtungs- oder Dämpfungselement vorgesehen, beispielsweise einseitig über der Hartkomponente übergezogen oder angespritzt.

Eine bevorzugte Ausführungsform wird dadurch erreicht, dass die Hartkomponente im Querschnitt senkrecht zur Längsachse konkave Einbuchtungen zur ersten Scheibe aufweist, die ein- oder beidseitig vorgesehen sind, welche das Sekundärteil beziehungsweise die Weichkomponente übergreifen. Das Sekundärteil übergreift beidseitig diese Einbuchtungen des Primärteils mit einer längs geführten Wulst, so dass bei einer formschlüssigen Anordnung der Hartkomponenten zur Scheibe eine zusätzliche Andruckwirkung der an der Seitenfläche der Fensterscheibe anliegenden Abschnitte des Primärteils bewirkt wird. Vorteilhaft ist dabei, dass die Abdichtwirkung des Primärteils dadurch verbessert werden kann. Dabei ist vorgesehen, dass die Einbuchtung sowohl im sichtbaren als auch im nicht sichtbaren Bereich ausgeführt und mit dem Sekundärteil kaschiert sein kann.

Bevorzugt ist weiter vorgesehen, dass das Primärteil mittels eines Primers oder eines Klebemittels mit der ersten Scheibe verbunden ist. Der Primer oder das Klebemittel wird dabei vor dem Auftrag des Primärteils auf die Scheibe aufgebracht. Diese Ausgestaltung verbessert die Dichtwirkung ebenfalls.

Alternativ kann vorgesehen sein, dass anstelle des Aufbringens eines Primers oder eines Klebemittels im Bereich des die Scheibe umgreifenden Rahmens das Primärteil unmittelbar an die Scheibe angespritzt wird und dass das Primärteil formschlüssig an dem Scheibenrand anliegt oder diesen umgreift und somit eine Abdichtwirkung erzielt.

Die weitere, der Erfindung zugrunde liegende Aufgabe wird durch ein Verfahren gemäß den Merkmalen des Anspruchs 6 gelöst. Ausführungsvarianten werden durch die folgenden Unteransprüche beschrieben.

Dies wird durch folgende Verfahrensschritte erreicht: Der Führungssteg und ein Primärteil eines Rahmens der Scheibeneinheit werden als Hartkomponente vorzugsweise gemeinsam an die erste Scheibe angespritzt. Das Primärteil wird in einem zumindest zur Außenseite des Fahrzeuges weisenden sichtbaren Bereich der Scheibeneinheit im eingebauten Zustand mit einem Sekundärteil umspritzt, welcher zumindest an der Au-ßenseite der ersten Scheibe abdichtend aufgetragen wird. Dadurch wird ermöglicht, dass die Einbringung eines Fensterführungssteges in das Herstellungsverfahren einer Zwei- oder Mehrkomponenten-Umspritzung integriert ist und die gesonderte Herstellung eines Fensterführungssteges und Beistellung zum Einlegen in ein Spritzgusswerkzeug entbehrlich ist.

Eine weitere bevorzugte Ausgestaltung des Verfahrens sieht vor, dass an dem Primärteil Befestigungselemente angeformt und/oder Einlegeteile integriert werden. Bevorzugt werden diese Befestigungselemente unmittelbar aus dem Primärteil ausgebildet. Es können beispielsweise Durchgangsbohrungen oder Haltelaschen mit Durchgangsbohrungen vorgesehen sein, in welche Klipse zur Befestigung an der Karosserie eingesetzt werden können. Weitere Befestigungstechniken sind ebenso denkbar, bei denen die Befestigungselemente unmittelbar aus der Hartkomponente bestehen. Ebenso können zusätzliche Einlegeteile vorgesehen werden, welche durch das Primärteil zumindest teilweise umspritzt werden, so dass diese fest integriert in der Umspritzung gehalten sind.

Die Erfindung wird im Folgenden anhand der Zeichnungen erläutert. Es zeigen:
- Figur 1: eine schematische Seitenansicht der Scheibeneinheit auf eine am Fahrzeug außen liegende Seite,
- Figur 2: ein Führungssteg der Scheibeneinheit im Querschnitt gemäß Schnitt II-II der Figur 1,
- Figur 3: der Führungssteg der Scheibeneinheit im Querschnitt gemäß Schnitt III-III der Figur 1,
- Figur 4: der Führungssteg der Scheibeneinheit im Querschnitt gemäß Schnitt IV-IV der Figur 1,
- Figur 5: der Führungssteg der Scheibeneinheit im Querschnitt gemäß Schnitt V-V der Figur 1, und
- Figur 6: ein eine Scheibe der Scheibeneinheit umgebenden Rahmen im Querschnitt senkrecht Längsrichtung.

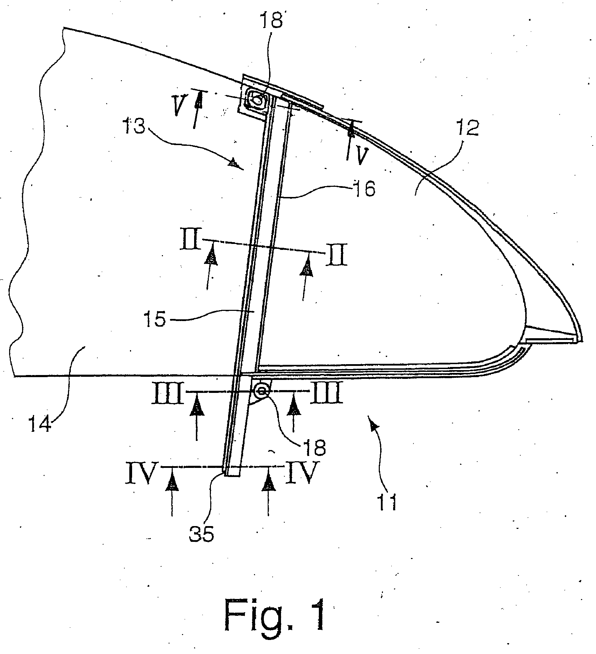

In Figur 1 ist eine Scheibeneinheit 51 in seitlicher Ansicht auf die am Fahrzeug außen liegende Seite gezeigt. Diese Scheibeneinheit 51 umfasst eine erste Scheibe 12, welche beispielsweise fest in der hinteren Tür eines Kraftfahrzeugs montierbar ist. Dabei ist die erste Scheibe 12 an der vertikalen Stirnseite 13 einer zweiten auf und ab bewegbaren Scheibe 14 zugeordnet. Die Scheibe 12 oder die Scheibe 14 kann aus Silikatglas, Acrylglas oder dergleichen hergestellt sein.

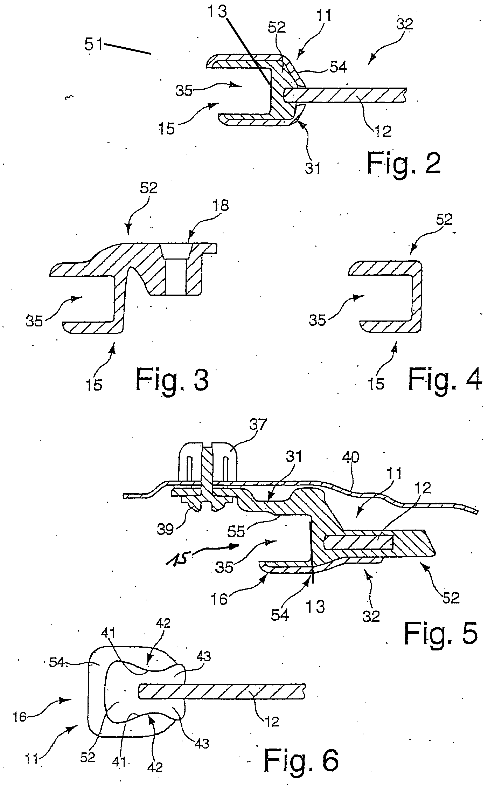

Zwischen der ersten Scheibe 12 und der zweiten Scheibe 14 ist ein Führungssteg 15 angeordnet, welcher sich nach unten in die Karosserie der Tür über die Stirnseite 13 der ersten Scheibe 12 hinaus fortsetzt, um die zweite Scheibe 14 im geöffneten Zustand weitestgehend oder vollständig zu führen. Die erste Scheibe 12 umfasst eine Umspritzung 16, welche im Ausführungsbeispiel die dreiecksförmige Scheibe 12 vollständig umgibt. Alternativ kann vorgesehen sein, dass die Umspritzung 16 die Scheibe 12 nicht vollständig umgibt, also nicht vollständig umlaufend ausgebildet ist, sondern nur einzelne Seitenabschnitte umfasst. Die Umspritzung 16 bildet einen Rahmen 11, in dem ein Fensterführungssteg 15 integriert ist, wie nachfolgend anhand der Figuren 2 bis 5 näher dargestellt ist.

Der Rahmen 11 besteht bevorzugt aus einer 2K-Umspritzung mit zwei Profilteilen 52, 54, und zwar dem Primärteil 52 aus einer Hartkomponente und dem Sekundärteil 54 aus einer Weichkomponente, wobei die Weichkomponente eine geringere Formfestigkeit als die Hartkomponente umfasst. In dem in Figur 2 dargestellten Schnitt umgreift das Sekundärteil 54 das Primärteil vollumfänglich. Lediglich die im Führungssteg 15 vorgesehene Fensterführung 35, welche als U-Profil ausgebildet ist, ist nicht vom Sekundärteil 54 überdeckt. Alternativ kann vorgesehen sein, dass auf einer Innenseite 31 der Scheibeneinheit 51 ein Sekundärteil 54 nicht vorgesehen ist. Auf der gegenüberliegenden Außenseite 32 schließt das Sekundärteil 54 vorzugsweise unmittelbar an die Scheibe 12 an und dichtet diese ab. Dies ist bevorzugt dann von Vorteil, wenn das Primärteil 52 nur an die Scheibe 12 angespritzt wird, ohne dass zuvor ein Primer oder Klebemittel aufgetragen ist.

Der Führungssteg 15 ist als Teil des Rahmens 11 ausgebildet. Dieser Querschnitt in Figur 2 zeigt, dass der Führungssteg 15 und der Rahmen 11 beziehungsweise das Primärteil 52 des Rahmens 11 ineinander integriert sind und aus der Hartkomponente bestehen. Der Führungssteg 15 wird quasi gleichzeitig mit der Herstellung des Primärteils 52 ausgebildet.

Als Materialien für die Umspritzung 16 werden beispielsweise als Hartkomponente für das Primärteil 52 und als Weichkomponente für das Sekundärteil 54 Materialien ausgewählt, welche beispielhaft in der EP 0 857 116 E1 beschrieben sind.

In Figur 3 ist der Führungssteg 15 im Querschnitt gemäß Schnitt III-III der Figur 1 gezeigt. Der Schnitt geht dabei durch den Führungssteg 15 und ein Befestigungsmittel 18. Der Schnitt III-III ist außerhalb des sichtbaren Bereiches der Scheibeneinheit 51 im eingebauten Zustand. In diesem Bereich ist der Führungssteg 15 ausschließlich aus der Hartkomponente hergestellt. Gleichzeitig ist das Befestigungsmittel 18 beispielsweise als Befestigungsbohrung oder Klipshalterung aus der Komponente ausgebildet und unmittelbar an den Führungssteg 15 angeformt. Diese Ausgestaltung weist den Vorteil auf, dass eine weitere Rationalisierung bei der Herstellung ermöglicht ist. Das Umspritzen des Führungssteges aus dem Primärteil 52 mit dem Sekundärteil 54 kann vorgesehen sein, insbesondere, wenn dabei zusätzlich eine Dämpfungs- oder Dichtungswirkung noch mit erzielt werden soll.

Figur 4 zeigt eine Schnittdarstellung entlang des Schnittes IV-IV in Figur 1. Das Primärteil 52 bildet ausschließlich den Führungssteg 15 mit der Fensterführung 35.

In Figur 5 ist ein weiterer Anbindungspunkt zur Befestigung der Scheibeneinheit 51 an der Karosserie im Schnitt V-V gemäß Figur 1 dargestellt. Dieser Schnitt zeigt einen Teil der Scheibe 12, der von dem Primärteil 52 zur Bildung der Umspritzung 16 umgeben ist. An der Außenseite 32 ist das Sekundärteil 54 auf dem Primärteil 52 angespritzt, um auch den optischen Ansprüchen gerecht zu werden. Durch das als Weichkomponente ausgebildete Sekundärteil 54 können entsprechende ebene oder glänzende Oberflächen mit hoher Designqualität ausgebildet werden. An einem Steg 55 der Fensterführung 35 des Führungssteges 15 ist unmittelbar ein Befestigungsmittel 18 angeformt, welches ebenso aus der Hartkomponente besteht. Die Außenseite dieses Steges 55 ist ohne Sekundärteil 54 ausgebildet, da dieser unmittelbar zur Karosserie 40 weist und nach außen nicht sichtbar ist. Das Befestigungsmittel 18 kann beispielsweise zur Aufnahme eines Befestigungselements 39, insbesondere einer Schraube dienen, welche in einen in die Karosserie 40 eingesetzten Clip 37 befestigbar ist.

Bei den vorstehenden Schnittdarstellungen gemäß den Figuren 2 bis 5 ist ein in die Fensterführung 35 einsetzbares Fensterführungselement zur Aufnahme der bewegbaren Scheibe 14 nicht näher dargestellt. Dieses wird durch Klemmen, Kleben oder Klipsen darin befestigt. Dieses Fensterführungselement dient gleichzeitig auch als Dichtung zur bewegbaren Scheibe 14.

In Figur 6 ist eine alternative Ausgestaltung eines Rahmens 11 einer Umspritzung 16 für die Scheibe 12 dargestellt. Bei dieser Ausführungsform ist vorgesehen, dass das Primärteil 52 unmittelbar an die Scheibe 12 angespritzt wird, ohne dass dabei ein Klebemittel oder ein Primer verwendet wird, um das Primärteil 52 an dem den Scheibenrand umgreifenden Bereich festzukleben. Vielmehr ist zur Abdichtung an einer Au-ßenseite oder an beiden Außenseiten des Primärteils 52 eine konkave Einbuchtung 41 vorgesehen, über welche sich das Sekundärteil 54 erstreckt und eine Wulst 42 ausbildet, die in die Einbuchtung 41 eingreift. Das Sekundärteil 54 erstreckt sich dabei jedoch nicht unmittelbar bis zur Scheibe 12 und überdeckt den unmittelbar an die Scheibe 12 angrenzenden Bereich des Primärteils 52. Durch diese Anordnung wird eine Art Klammerwirkung erzielt, wodurch die beiden an der Seitenfläche der Scheibe 12 anliegenden Abschnitte 43 des Primärteils 52 unter Druck an der Seitenfläche der Scheibe 12 anliegen und eine Abdichtwirkung erzielen.

Die Herstellung der Scheibeneinheit 51 erfolgt bei allen vorbeschriebenen Ausführungsformen dadurch, dass der Führungssteg 15 als Hartkomponente gleichzeitig mit dem Primärteil 52 an die erste Scheibe 12 angespritzt wird, wobei der Spritzvorgang des Sekundärteils 54 als Weichkomponente anschließend im zweiten Schritt erfolgt. Alternativ kann auch vorgesehen sein, dass das Primärteil 52 und der Führungssteg 15 getrennt aus der Hartkomponente in einem Spritzvorgang gleichzeitig oder nacheinander hergestellt werden, so dass anschließend in einem zweiten Schritt durch das Sekundärteil 54 der Führungssteg 15 und das Primärteil 52,welche einen Abschnitt des Rahmens 11 für die Scheibe 12 bilden, miteinander verbunden werden. Diese Anordnung ist ebenso möglich und weist den Vorteil auf, dass eine separate Herstellung des Führungssteges 15 und ein separates Einlegen in ein Spritzgusswerkzeug entbehrlich sind.

## Patentansprüche

1. Scheibeneinheit (51) für Fenster an Kraftfahrzeugen
- mit einer ersten festen Scheibe (12),
- mit einem Rahmen (11), der ein Rahmenprofil aufweist und den Rand der ersten Scheibe (12) an wenigstens zwei Längsseiten umfasst oder die erste Scheibe (12) ringförmig in sich geschlossen umgibt, und
- der Rahmen (11) als Umspritzung (16) ausgebildet ist, welche aus zwei Profilteilen (52, 54) mit einem Primärteil (52) und einem Sekundärteil (54) besteht, wobei
- das Primärteil (52) als Hartkomponente ausgebildet ist, dessen Formfestigkeit größer als diejenige des als Weichkomponente ausgebildeten Sekundärteils (54) ist, und das Primärteil (52) direkt an der ersten festen Scheibe (12) angespritzt ist,
- die Scheibeneinheit (51) als Führung für eine zweite auf und ab bewegbare Scheibe (14) einen U-förmigen Fensterführungssteg (15) aufweist, der zwischen der ersten festen Scheibe (12) sowie der auf und ab bewegbaren zweiten Scheibe (14) angeordnet ist und der U-förmige Fensterführungssteg (15) und das Primärteil (52) einstückig sind, **dadurch gekennzeichnet, dass** sich der U-förmige Fensterführungssteg (15) über eine Stirnseite (13) der ersten festen Scheibe (12) hinaus nach unten in eine Karosserie der Tür fortsetzt und der Fensterführungssteg (15) und das Primärteil (52) des Rahmens (11) weiterhin einstückig ausgebildet sind.

2. Scheibeneinheit nach Anspruch 1, **dadurch gekennzeichnet, dass** außerhalb eines sichtbaren Bereiches der Scheibeneinheit (51) im eingebauten Zustand Befestigungselemente (18), vorzugsweise Bohrungen, Gewinde, Einlegeteile oder Umschuhungen, aus der Hartkomponente ausgebildet sind, welche an dem Führungssteg (15) angeformt sind.

3. Scheibeneinheit nach einem oder mehreren der Ansprüche 1 oder 2, **dadurch gekennzeichnet, dass** das Sekundärteil (54) des Rahmens (11) zumindest abschnittsweise das Primärteil (52) umgibt und im sichtbaren Bereich der Scheibeneinheit (51) an einer Au-ßenseite der Scheibe (12) oder beidseitig an der Scheibe (12) abdichtend abschließt.

4. Scheibeneinheit nach einem oder mehreren der Ansprüche 1 bis 3, **dadurch gekennzeichnet, dass** das Primärteil (52) im Querschnitt senkrecht zur Längsachse konkave Einbuchtungen (41) zur ersten Scheibe (12) aufweist, die ein- oder beidseitig vorgesehen sind, welche das Sekundärteil (54) übergreifen.

5. Scheibeneinheit nach einem oder mehreren der Ansprüche 1 bis 4, **dadurch gekennzeichnet, dass** das Primärteil (52) mittels eines Primers oder eines Klebemittels mit der ersten festen Scheibe (12) verbunden ist.

6. Verfahren zur Herstellung einer Scheibeneinheit gemäß einem oder mehreren der Ansprüche 1 bis 5, **gekennzeichnet durch** folgende Verfahrensschritte: Ein Führungssteg (15) und ein Primärteil (52) eines Rahmens (11) der Scheibeneinheit (51) werden als Hartkomponente an die erste feste Scheibe (12) angespritzt, das Primärteil (52) wird in einem zumindest zur Außenseite des Fahrzeuges weisenden sichtbaren Bereich der Scheibeneinheit (51) mit einem Sekundärteil (54) umspritzt, welches zumindest an der Außenseite der ersten festen Scheibe (12) abdichtend aufgetragen wird.

7. Verfahren zur Herstellung einer Scheibeneinheit nach Anspruch 6, **dadurch gekennzeichnet, dass** an dem Primärteil (52) Befestigungselemente (18) angeformt und/oder Einlegeteile integriert werden.

## Claims

1. Pane unit (51) for windows on motor vehicles,
- with a first fixed pane (12),
- with a frame (11) which has a frame profile and surrounds the margin of the first pane (12) on at least two longitudinal sides, the frame (11) surrounding annularly the first pane (12) so as to be closed on itself, and
- the frame (11) is provided as a moulding (16) which is formed from two profile parts (52, 54) with a primary part (52) and with a secondary part (54), wherein
- the primary part (52) is formed as a hard component, the dimensional stability of which is greater than that of the secondary part (54) formed as a soft component, and the primary part (52) is molded directly onto the first fixed pane (12),
- the pane unit (51) comprises as a guide for an up and down movable second pane (14) a U-shaped guide web (15), which is provided between the first fixed pane (12) and the up and down movable second pane (14), the U-shaped guide web (15) and the primary part (52) are integrally formed, **characterized in that**
- the U-shaped guide web (15) extends far of a face side (13) of the first fixed pane (12) downwards into a body of the door and the guide web (15) and the primary part (52) fo the frame (11) is further integrally formed.

2. Pane unit according to Claim 1, **characterized in that**, outside a visible region of the pane unit (51) in the installed state, fastening elements (18), preferably bores, threads, introduction parts or shoe fittings, are produced from the hard component and are integrally formed on the guide web (15).

3. Pane unit according to one or more of Claims 1 or 2, **characterized in that** the secondary part (52) of the frame (11) at least partially surrounds the primary part (52) and, in the visible region of the pane unit (51), closes off sealingly on an outside of the pane (12) or on both sides of the pane (12).

4. Pane unit according to one or more of Claims 1 to 3, **characterized in that** the primary part (52) has in cross section, perpendicularly to the longitudinal axis, concave indentations (41) towards the first pane (12), which are provided on one side or on both sides and over which the secondary part (54) engages.

5. Pane unit according to one or more of Claims 1 to 4, **characterized in that** the primary part (52) is connected to the first pane (12) by means of a primer or an adhesive.

6. Method for producing a pane unit according to one or more of Claims 1 to 5, **characterized by** the following method steps: a guide web (15) and a primary part (52) of a frame (11) of the pane unit (51) are injection-moulded as a hard component onto the first fixed pane (12), and the primary part (52) is injection-moulded around, in a visible region of the pane unit (51) which points at least towards the outside of the vehicle, with a secondary part (54) which is applied sealingly at least to the outside of the first fixed pane (12).

7. Method for producing a pane unit according to Claim 6, **characterized in that** fastening elements (18) are integrally formed and/or introduction parts are integrated on the primary part (52).

## Revendications

1. Module de vitrage (51) pour fenêtre de voitures automobiles,
- avec une première vitre (12) fixe,
- avec un cadre (11) qui présente un profilé de cadre et qui entoure le bord de la première vitre (12) sur au moins deux côtés longitudinaux ou qui entoure la première vitre (12) tel un anneau, de manière fermée en soi, et
- le cadre (11) étant formé en tant que surmoulage (16) constitué par deux parties de profilé (52, 54), à savoir une partie primaire (52) et une partie secondaire (54),
- la partie primaire (52) étant formée en tant que composant dur dont la stabilité de forme est supérieure à celle de la partie secondaire (54) formée en tant que composant souple, et la partie primaire (52) étant formée par moulage par injection directement sur la première vitre (12) fixe,
- le module de vitrage (51) présentant, en tant que guide pour une deuxième vitre (14) capable de monter et descendre, une partie de guidage de fenêtre (15) en forme de U qui est disposée entre la première vitre (12) fixe et la deuxième vitre (14) capable de monter et descendre, et la partie de guidage de fenêtre (15) en forme de U et la partie primaire (52) étant réalisées en une seule pièce, **caractérisé en ce que** la partie de guidage de fenêtre (15) en forme de U se prolonge vers le bas par-delà une face frontale (13) de la première vitre (12) fixe dans une carrosserie de la portière, et **en ce que** la partie de guidage de fenêtre (15) et la partie primaire (52) du cadre (11) sont réalisées également en une seule pièce.

2. Module de vitrage selon la revendication 1, **caractérisé en ce qu'**à l'extérieur d'une zone visible du module de vitrage (51) à l'état monté, des éléments de fixation (18), de préférence des perforations, des filetages, des inserts ou des supports de base, sont réalisés dans le composant dur et sont moulés sur la partie de guidage (15).

3. Module de vitrage selon l'une ou plusieurs des revendications 1 ou 2, **caractérisé en ce que** la partie secondaire (54) du cadre (11) entoure au moins partiellement la partie primaire (52) et, dans la zone visible du module de vitrage (51), est contiguë de manière étanche à la vitre (12), sur une face extérieure de ladite vitre (12) ou sur les deux faces de celle-ci.

4. Module de vitrage selon l'une ou plusieurs des revendications 1 à 3, **caractérisé en ce que** la partie primaire (52) présente en coupe transversale, perpendiculairement à l'axe longitudinal, des bosses rentrantes (41) concaves par rapport à la première vitre (12), lesquelles sont prévues sur un seul côté ou des deux côtés et s'étendent au-delà de la partie secondaire (54).

5. Module de vitrage selon l'une ou plusieurs des revendications 1 à 4, **caractérisé en ce que** la partie primaire (52) est reliée à la première vitre (12) fixe au moyen d'un primaire ou d'une substance adhésive.

6. Procédé destiné à la fabrication d'un module de vitrage selon l'une ou plusieurs des revendications 1 à 5, **caractérisé par** les étapes suivantes : une partie de guidage (15) et une partie primaire (52) d'un cadre (11) du module de vitrage (51) sont formées par moulage par injection en tant que composant dur sur la première vitre (12) fixe, la partie primaire (52) est surmoulée dans une zone visible du module de vitrage (51), qui est tournée au moins vers la face extérieure du véhicule automobile, avec une partie secondaire (54) qui est appliquée de manière étanche au moins sur la face extérieure de la première vitre (12) fixe.

7. Procédé destiné à la fabrication d'un module de vitrage selon la revendication 6, **caractérisé en ce que** des éléments de fixation (18) sont formés sur la partie primaire (52) et/ou que des inserts y sont intégrés.
